# EUROPÄISCHE PATENTANMELDUNG

(11) **EP 2 679 547 A1**
(43) Veröffentlichungstag der Anmeldung: **01.01.2014**
(21) Anmeldenummer: 12174296.9
(22) Anmeldetag: 29.06.2012
(51) Int. Cl.: C03B 3/02, F27D 13/00

(54) **Vorrichtung zum Vorwärmen eines vorzugsweise mit Rohstoffen zur Glasherstellung angreicherten Glasscherbengemenges**

(71) Anmelder: Interprojekt GmbH, 45327 Essen (DE)
(72) Erfinder: Baberkov, Boris, Dr.-Ing., 45133 Essen (DE)
(74) Vertreter: Gille Hrabal

(57) **Zusammenfassung**

Es ist eine Vorrichtung (1) zum Vorwärmen eines vorzugsweise mit Rohstoffen zur Glasherstellung angereicherten Glasscherbengemenges (2) mit einem Bunker (12) zum Aufnehmen des Glasscherbengemenges, einem oberhalb des Bunkers angeordneten Kopfteil (11) zum Zuführen des Glasscherbengemenges zum Bunker; einem unterhalb des Bunkers angeordneten Bodenbereich (13) mit einer Ausflussöffnung (131) zum Ausfließen des Glasscherbengemenges aus dem Bunker; und Heizmitteln (3) zum Durchleiten von warmem Abgasen (A) von unten nach oben durch das im Bunker befindliche Glasscherbengemenge, offenbart, welche erfindungsgemäß dadurch gekennzeichnet, dass das Kopfteil (11) gasdicht gegenüber der Umgebung ausgebildet ist.

## Beschreibung

Die Erfindung betrifft eine Vorrichtung zum Vorwärmer eines vorzugsweise mit Rohstoffen zur Glasherstellung angereicherten Glasscherbengemenges, bei der warme Abgasen von unten nach oben durch das Glasscherbengemenge geleitet werden. Derartige Vorrichtungen werden auch als Einlegegutvorwörmer (EGV) bezeichnet.

DE 34 16 317 offenbart eine entsprechende Vorrichtung, welche während des Glasherstellungsprozesses die Wärmeenergie der bei der Verbrennung der Rohstoffe im Schmelzofen entstehenden Abgase zur Vorwärmung des Glasscherbengemenges nutzt. Dabei werden die Abgase in der Regel entlang von Strömungskanälen durch den Bunker geführt, nämlich durch das Glasscherbengemenge hindurch, Innerhalb des Bunkers wird die Wärmeenergie des Abgases mindestens teilweise auf das Glasscherbengemenge übertragen. Die Vorwärmung des Glasscherbengemenges führt letztlich zu einer Reduktion der bei dem nachfolgenden Schmelzvorgang im Schmelzofen benötigten Wärmeenergie. Nach Durchfluss des Glasscherbengemenges durch den Bunker wird dieses aus der Vorwärmervorrichtung ausgetragen und dem eigentlichen Schmelzofen zugeführt. Bei der oben genannten Vorrichtung sind die Strömungskanäle geschlossen, das heißt die Abgase treten nicht unmittelbar in Kontakt mit dem Glasscherbengemenge. Der Wärmeübergang erfolgt daher nur dort, wo das Glasscherbengemenge unmittelbar an den Strömungskanälen angrenzt. Das Glasscherbengemenge hat eine geringe Wärmeleitfähigkeit, weshalb nur Material in unmittelbarer Umgebung des Strömungskanals erwärmt wird. Zur Vorwärmung des gesamten Glasscherbengemenges müssen die Strömungskanäle daher einen großen Querschnitt haben, was mit erhöhten Kosten verbunden ist.

Daher sind aus DE 40 07 115 und DE 34 16 317 Vorrichtungen bekannt, bei denen die Strömungskanäle nicht geschlossen, sondern offen sind. Diese erlauben einen unmittelbaren Kontakt der Abgase in mit dem Glasscherbengemenge, was zu einem verbesserten, tiefer in das Gemenge wirkenden Wärmeübergang führt. Die Strömungskanäle können zum Beispiel waagerecht durch den Scherbenbunker führen und dachartig nach unten offen sein, damit das Gemenge von oben mit den Abgasen in Kontakt kommt. Sie können aber auch mit Düsen, Schlitzen, versehen sein, um ein kontrolliertes Durchströmen der Abgase durch das Gemenge zu ermöglichen. Das Glasscherbengemenge ist in der Regel sehr kompakt, ähnlich wie feuchter Sand, da das Glasscherbengemenge häufig mit Rohstoffen zur Glasherstellung angereichert ist. Dem Vorteil der offenen Strömungskanäle steht der Nachteil entgegen, dass die aus den Strömungskanälen austretenden Abgase daran gehindert werden müssen, unkontrolliert aus der Vorrichtung in die Umgebung zu strömen, z. B. aus dem oberhalb des Scherbenbunkers angeordneten Kopfteil zum Zuführen des Glasscherbengemenges zum Bunker, z. B. per Förderband oder Eimerkette. Daher sind im oberen Bereich der Vorrichtung offene Strömungskanäle zum Absaugen der Abgase aus den Gemenge vorgesehen, die unter Unterdruck stehen und unterhalb des Füllstandes des Gemenges verlaufen. Daher ist während des Betriebes nachteilhafterweise darauf zu achten, dass der Füllstand stets ausreichend hoch ist, um eine zuverlässige Abgasabsaugung zu ermöglichen. Falls die Überdeckung, d. h. zu wenig oder kein Gemenge die absaugenden Strömungskanäle überdeckt, werden die Abgase nicht zuverlässig eingesaugt und es wird nachteilhafterweise eine große Menge Umgebungsluft mit angesaugt, welche das Volumen der zu reinigenden Abgase erhöht, Kondensation fördert, insbesondere mit der Folge der Säurebildung und/oder Verklumpung des Gemenges, wirkungsgradmindernd Wärme entzieht, höhere Absaugleistung benötigt, etc. Wenn eine solche Vorrichtung unter Unterdruck im Bunker gefahren wird, können zwar keine Abgase aus dem oberen Teil der Vorrichtung in die Umgebung gelangen, es wird ebenfalls unnötig viel Ungebungsluft angesaugt. Das gleiche gilt sinngemäß, wenn zu wenig Gemenge die absaugenden Strömungskanäle überdeckt.

Die aus dem Stand der Technik bekannten Vorrichtungen erfordern also einen hohen Materialaufwand zur Bereitstellung geschlossener Strömungskanäle oder besondere Sorgfalt beim Betrieb zur Einhaltung der notwendigen Überdeckung

Es ist daher Aufgabe der Erfindung, eine verbesserte Vorrichtung zum Vorwärmen eines vorzugsweise mit Rohstoffen zur Glasherstellung angereicherten Glasscherbengemenges zu schaffen.

Diese Aufgabe wird gelöst durch eine Vorrichtung mit den Merkmalen des Hauptanspruchs. Vorteilhafte Ausgestaltungen sind Gegenstand der Unteransprüche.

Es wird vorgeschlagen, eine Vorrichtung zum Vorwärmer eines vorzugsweise mit Rohstoffen zur Glasherstellung angereicherten Glasscherbengemenges mit einem Bunker zum Aufnehmen des Glasscherbengemenges, einem oberhalb des Bunkers angeordneten Kopfteil zum Zuführen des Glasscherbengemenges zum Bunker; einem unterhalb des Bunkers angeordneten Bodenbereich mit einer Ausflussöffnung zum Ausfließen des Glasscherbengemenges aus dem Bunker; und Heizmitteln zum Durchleiten von warmem Abgasen von unten nach oben durch das im Bunker befindliche Glasscherbengemenge, zu verbessern, indem das Kopfteil gasdicht gegenüber der Umgebung ausgebildet ist. Daher kann im Unterdruckbetrieb keine unerwünschte Umgebungsluft abgesaugt werden beziehungsweise im Über- oder Umgebungsdruckbetrieb kein Abgas aus dem Kopfteil entweichen. Auch ist der Betrieb der Vorrichtung unabhängig von dem Füllstand gewährleistet. Eine Ausflussöffnung kann z. B. als einfacher einzelner Trichter, mehrfach nebeneinander liegende Trichter oder Senken ausgebildet sein. Sie kann aber auch in Form einer Bodenwanne mit Austragsschnecken oder dergleichen vorliegen, wie in DE-A 10 2009 019 454 offenbart. Ein gasdichtes Kopfteil im Sinne der Erfindung liegt dann vor, wenn das innere Volumen der Vorrichtung oberhalb des minimalen Füllstandes, für den die Vorrichtung ausgelegt ist, nicht in nennenswerten Umfang mit der Umgebung in Austausch treten kann. Ein nicht nennenswerter Umfang liegt dann vor, wenn das ausgetauschte Gas weniger als 25%, vorzugsweise 10%, des durch die Vorrichtung geführten Abgases ausmacht,

Vorzugsweise weist das Kopfteil eine gegen die Umgebung gasdichte Schleuse zum Zuführen des Glasscherbengemenges zum Bunker auf. Somit kann das Kopfteil zum Zuführen des Gemenges eingesetzt werden, obwohl es gasdicht ist. Als Schleuse kommt jede geeignete Bauform in Betracht, z. B. wie bei Hochöfen. Eine Schleuse führt zwar zu einem Austausch mit der Umgebung, gilt aber dennoch als gasdicht in Sinn der Erfindung.

In einer bevorzugten Ausgestaltung verfügt die Schleuse über eine Schleusenkammer mit einer zur Umgebung gerichteten Eingangstüre und einer zum Inneren des Bunkers gerichteten Ausgangstüre. Diese sind derart ausgestaltet, dass die Türen nur abwechselnd geöffnet werden können. Wesentlich ist, dass zu keinem Zeitpunkt beide Türen gleichzeitig geöffnet sind. Vorzugsweise ist die Ausgangstüre derart ausgebildet, dass diese im ihrem verschlossen Zustand das zuzuführende Glasscherbengemenge tragen kann bis sie geöffnet wird. Die Tür dient also gleichzeitig als Zwischenlager für das Gemenge im geschlossenen Zustand, Zuführmittel beim Öffnen und gasdichter Verschluss. Die Synchronisation der Türen erfolgt über eine entsprechende Mechanik oder Steuerung.

In einer vorteilhaften Ausgestaltung weist das Kopfteil eine Vielzahl, insbesondere genau zwei Schleusen auf, und es ist eine Steuerung vorgesehen, insbesondere derart, dass wenn die Ausgangstüre der einen Schleuse geöffnet ist, die Eingangstüre der anderen Schleuse geöffnet ist. Daher kann kontinuierlich immer eine der beiden Schleusenkammern durch die Eingangstüre beladen werden.

Wenn das Kopfteil, insbesondere oberhalb einer für die Vorrichtung geplanten maximalen Füllhöhe, eine erweiterte Querschnittsfläche aufweist, welche vorzugsweise die Querschnittsfläche des Bunkers um 50%, insbesondere 100% übersteigt, verringert sich die Strömungsgeschwindigkeit des in der Vorrichtung durch das Gemenge hindurch von unten nach oben geführten Abgases im Kopfteil, Das Mitreißen von feinen Partikeln unterbleibt beziehungsweise wird reduziert und die Abgase enthalten weniger mitgeführte Partikel aus dem Gemenge.

Wenn die Heizmittel offene Strömungskanäle im Bunker zum Durchleiten der warmem Abgasen von unten nach oben durch den Bunker aufweisen, können die Abgase direkt mit dem Gemenge in Wärmeaustausch treten. Gleichzeitig sorgen die offenen Strömungskanäle für eine gewisse Führung der Abgase, so das eine gleichmäßigere Verteilung der Abgasströme im Gemenge gewährleistet ist im Vergleich zum vollständig ungeführten Einleiten der Abgase. Daher sind insbesondere mehrere übereinander angeordnete im Wesentlichen horizontal verlaufende Strömungskanäle vorgesehen, insbesondere vorzugsweise randseitig wechselseitig über geschlossene vertikale Abschnitte miteinander verbundnen sind, um die Abgase nacheinander über die Länge der einzelnen Strömungskanäle zu leiten. Die Abgase werden also mäanderartig von unten nach oben durch das Gemenge geleitet.

Vorzugsweise sind die Strömungskanäle nach unten offen, wie aus dem Stand der Technik bekannt. Dies erlaubt ein Führen der nach oben strebenden heißen Abgase bei gleichzeitigem unmittelbaren Kontakt mit dem Gemenge. Wenn die Kanäle nur nach unten hin offen sind, wird das Abgas gezwungen nicht durch in Gemenge freigeblasene Kanäle zu strömen. In einer bevorzugten Ausgestaltung sind die Strömungskanäle als dachartiges Profil, vorzugsweise mit spitzer Oberkante zur Vermeidung von Anbackungen, ausgebildet. Die Strömungskanäle gehen im wesentlichen waagerecht durch den Scherbenbunker. Sie sind insbesondere nach unten offen und/oder oder mit Düsen, Schlitzen, etc. versehen.

In einer besonders vorteilhaften Ausgestaltung der Erfindung, ist einer der Strömungskanäle, insbesondere der unterste der Strömungskänale, mit einer Abgaszuführungsleitung verbunden ist und im Kopfteil eine Abgasabführleitung zum Abführen des Abgases aus der Vorrichtung vorgesehen. Das Abgas strömt also durch die Strömungskanäle und durch das Gemenge bis zum oberen Füllstand und wird dann im Kopfteil abgesaugt. Dieser Vorgang ist unabhängig vom Füllstand, da keine Überdeckung des obersten, absaugenden Strömungskanals nötig ist. Daher ist vorzugsweise die Abgasabführleitung im oberen Abschnitt, insbesondere im obersten Abschnitt des Kopfteils angeordnet, Insbesondere in Wechselwirkung mit den nach oben hin vergrößerten Querschnitt im Kopfteil, werden vergleichsweise wenig Partikel der Abgasabführleitung zugeführt. Vorzugsweise ist die Abgasabführleitung mit einer Saugeinrichtung verbunden, welche insbesondere derart ausgelegt ist, dass in der Vorrichtung ein Unterdruck relativ zur Umgebung herrscht.

In einer weiteren vorteilhaften Ausgestaltung wurde erkannt, dass es möglich ist, das Kopfteil in Bezug auf Volumen und Querschnittsfläche und die Durchflussmenge des durch die Vorrichtung geführten Abgases derart aufeinander abzustimmen, dass der Kopfteil als Reaktor zur Durchführung einer Abscheidung von säurigen Bestandteilen im Rauchgas (insbesondere SOx; HF; HCI), dienen kann. Bei sachgerechter Auslegung ist die Verweilzeit ausreichend, damit die einzelnen an der Reaktion beteiligten Komponenten die gewünschte Reaktion durchführen können. Ein zusätzlicher, nachgeschalteter separater Reaktor kann eingespart werden. Daher ist vorzugsweise im weiteren Verlauf der Abgasführung bis zum Filter vor dem Schornstein kein weiterer Reaktor angeordnet.

Weitere Vorteile ergeben sich aus der folgenden Beschreibung und den beigefügten Figuren. Ebenso können die vorstehend genannten und noch weiter ausgeführten Merkmale erfindungsgemäß jeweils einzeln oder in beliebigen Kombinationen miteinander verwendet werden. Die erwähnen Ausführungsbeispiele sind nicht abschließend zu verstehen und haben beispielhaften Charakter.

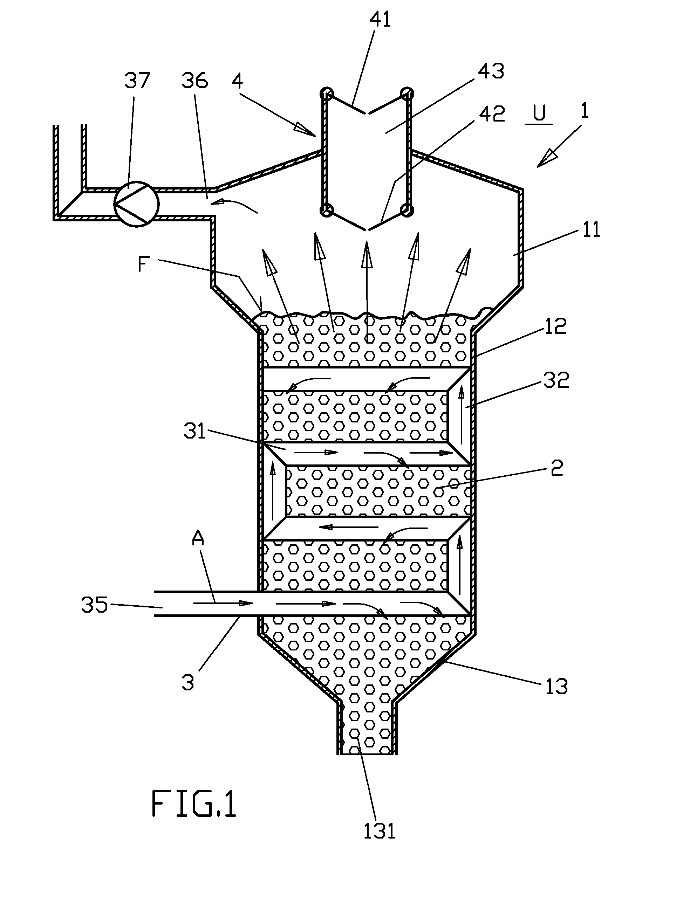

Fig 1 zeigt die erfindungsgemäße Vorrichtung 1 zum Vorwärmer eines mit Rohstoffen zur Glasherstellung angereicherten Glasscherbengemenges 2, welches vorliegend sandähnlich ist. Diese umfasst einen Bunker 12 zum Aufnehmen des Glasscherbengemenges 2 und einem oberhalb des Bunkers angeordneten Kopfteil 11 mit einer Schleuse 4 zum druckdichten Zuführen des Glasscherbengemenges zum Bunker 12. Das Kopfteil 11 ist gasdicht gegenüber der Umgebung U ausgebildet. Unterhalb des Bunkers ist ein Bodenbereich 13 angeordnet mit einer Ausflussöffnung 131 zum Ausfließen des Glasscherbengemenges aus dem Bunker, deren Funktion hier nicht näher dargestellt ist. Heizmittel 3 zum Durchleiten von warmem Abgasen A von unten nach oben durch das im Bunker befindliches Glasscherbengemenge 2 durchziehen das Glasscherbengemenge

Die Heizmittel 3 weisen offene Strömungskanäle 31 auf. Diese verlaufen übereinander im Wesentlichen horizontal und sind mäanderartig randseitig wechselseitig über geschlossene oder geöffnete vertikale Abschnitte 32 miteinander verbundnen sind, um die Abgase A nacheinander über die Länge der einzelnen Strömungskanäle zu leiten. Diese können teilweise die Kanäle verlassen und das Gemenge druchströmen. Der unterste der Strömungskänale, ist mit einer Abgaszuführungsleitung 35 verbunden, welche vom Brenner kommt, Im Kopfteil ist eine Abgasabführleitung 36 zum Abführen des Abgases aus der Vorrichtung vorgesehen ist, welche im oberen Abschnitt des Kopfteils 11 1 angeordnet ist. Sie ist einer Saugeinrichtung 37 verbunden, so dass in der Vorrichtung ein Unterdruck relativ zur Umgebung herrscht.

Das Kopfteil 11 1 ist in Bezug auf Volumen und Querschnittsfläche und die Durchflussmenge des durch die Vorrichtung geführten Abgases derart ausgelegt, dass das Kopfteil als Reaktor zur Durchführung einer Abscheidung von säurigen Bestandteilen im Rauchgas, insbesondere SOx; HF; HCI, dienen kann. Daher ist im weiteren Verlauf der Abgasführung bis zum Filter vor dem Schornstein oder dem Schornstein kein weiterer Reaktor angeordnet.

Vorrichtung nach Anspruch 1, **dadurch gekennzeichnet, dass** das Kopfteil eine gegen die Umgebung gasdichte und hier nur symbolhaft dargestellte Schleuse 4 zum Zuführen des Glasscherbengemenges zum Bunker aufweist.

Die Schleusenkammer 43 der Schleuse 4 verfügt eine zur Umgebung gerichteten Eingangstüre 41 und einer zum Inneren des Bunkers gerichteten Ausgangstüre 42, wobei letztere im ihrem verschlossen Zustand das zuzuführende Glasscherbengemenge tragen kann bis sie geöffnet wird.

Da das Kopf teil 1 1 , eine erweiterte Querschnittsfläche aufweist, verlangsamen sich dort die Abgase A.

## Patentansprüche

1. Vorrichtung (1) zum Vorwärmen eines vorzugsweise mit Rohstoffen zur Glasherstellung angereicherten Glasscherbengemenges (2) mit
- einem Bunker (12) zum Aufnehmen des Glasscherbengemenges, einem oberhalb des Bunkers angeordneten Kopfteil (11) zum Zuführen des Glasscherbengemenges zum Bunker (12);
- einem unterhalb des Bunkers angeordneten Bodenbereich (13) mit einer Ausflussöffnung (131) zum Ausfließen des Glasscherbengemenges aus dem Bunker; und
- Heizmitteln (3) zum Durchleiten von warmem Abgasen (A) von unten nach oben durch ein im Bunker befindliches Glasscherbengemenge (2),
**dadurch gekennzeichnet, dass**
das Kopfteil (11) gasdicht gegenüber der Umgebung (U) ausgebildet ist.

2. Vorrichtung nach Anspruch 1 , **dadurch gekennzeichnet, dass** das Kopfteil eine gegen die Umgebung gasdichte Schleuse (4) zum Zuführen des Glasscherbengemenges zum Bunker aufweist.

3. Vorrichtung nach Anspruch 1 oder 2, **dadurch gekennzeichnet, dass** die Schleuse über eine, vorzugsweise nur ein einzige, Schleusenkammer (43) mit einer zur Umgebung gerichteten Eingangstüre (41) und einer zum Inneren des Bunkers gerichteten Ausgangstüre (42) verfügt, welche derart ausgestaltet sind, dass die Türen nur abwechselnd geöffnet werden können, wobei vorzugsweise die Ausgangstüre derart ausgebildet ist, dass diese im ihrem verschlossen Zustand das zuzuführende Glasscherbengemenge tragen kann bis sie geöffnet wird.

4. Vorrichtung nach einem der vorherigen Ansprüche, **dadurch gekennzeichnet, dass** das Kopfteil eine Vielzahl, insbesondere genau zwei Schleusen aufweist und eine Steuerung vorgesehen ist, insbesondere derart, dass wenn die Ausgangstüre der einen Schleuse geöffnet ist, die Eingangstüre der anderen Schleuse geöffnet ist.

5. Vorrichtung nach einem der vorherigen Ansprüche, **dadurch gekennzeichnet, dass** das Kopfteil (11), insbesondere oberhalb einer für die Vorrichtung geplanten maximalen Füllhöhe (F), eine erweiterte Querschnittsfläche aufweist, welche vorzugsweise die Querschnittsfläche des Bunkers um 50%, insbesondere 100% übersteigt.

6. Vorrichtung nach einem der vorherigen Ansprüche, **dadurch gekennzeichnet, dass** die Heizmittel (3) offene Strömungskanäle (31) im Bunker zum Durchleiten der warmem Abgasen (A) von unten nach oben durch den Bunker aufweisen, wobei insbesondere mehrere übereinander angeordnete im Wesentlichen horizontal verlaufende Strömungskanäle vorgesehen sind, insbesondere vorzugsweise randseitig wechselseitig über geschlossene oder teilgeöffnete vertikale Abschnitte (32) miteinander verbundnen sind, um die Abgase nacheinander über die Länge der einzelnen Strömungskanäle zu leiten.

7. Vorrichtung nach einem der vorherigen Ansprüche, **dadurch gekennzeichnet, dass** die Strömungskanäle nach unten offen sind, insbesondere nur nach unten hin offen sind, vorzugsweise ein dachartiges Profil, vorzugsweise mit spitzer Oberkante aufweisen.

8. Vorrichtung nach einem der vorherigen Ansprüche, **dadurch gekennzeichnet, dass** einer der Strömungskanäle, insbesondere der unterste der Strömungskänale, mit einer Abgaszuführungsleitung (35) verbunden ist und im Kopfteil eine Abgasabführleitung (36) zum Abführen des Abgases aus der Vorrichtung vorgesehen ist, welche vorzugsweise
- im oberen Abschnitt, insbesondere im obersten Abschnitt des Kopfteils (11) angeordnet ist und/oder
- mit einer Saugeinrichtung (37) verbunden ist, welche insbesondere derart ausgelegt ist, dass in der Vorrichtung ein Unterdruck relativ zur Umgebung herrscht.

9. Vorrichtung nach einem der vorherigen Ansprüche, **dadurch gekennzeichnet, dass** das Kopfteil in Bezug auf Volumen und Querschnittsfläche und die Durchflussmenge des durch die Vorrichtung geführten Abgases derart ausgelegt ist, dass das Kopfteil als Reaktor zur Durchführung einer Abscheidung von säurigen Bestandteilen im Rauchgas, insbesondere SOx; HF; HCI, dienen kann, wobei insbesondere im weiteren Verlauf der Abgasführung bis zum Filter vor dem Schornstein kein weiterer Reaktor angeordnet ist.
